# EUROPEAN PATENT SPECIFICATION

(11) **EP 3 417 167 B1**
(45) Date of publication and mention of the grant of the patent: **18.12.2019**
(21) Application number: 17709488.5
(22) Date of filing: 17.02.2017
(51) Int. Cl.: F03B 13/18, F03B 13/20, B63B 35/44, C25B 1/04

(54) **FLOATING WAVE ENERGY CONVERSION ISLAND PLATFORMS**
SCHWIMMENDE WELLENENERGIEUMWANDLUNGSPLATTFORMEN
PLATES-FORMES D'ÎLOTS DE CONVERSION D'ÉNERGIE MARÉMOTRICE FLOTTANTES

(30) Priority: 17.02.2016 JP 2016027888
(43) Date of publication of application: 26.12.2018
(73) Proprietor: Enix Co., Ltd., Chiyoda-ku, Tokyo 100-6162 (JP)
(72) Inventor: NOIA Giampaolo Francesco, Genoa 16136 (IT); SCHAFFNER Edwin Kendall, Swansea Illinois 62226 (US)
(74) Representative: Schwöbel, Thilo K.
(86) International application number: PCT/JP2017/005957
(87) International publication number: WO 2017/142073

(56) References cited:
- WO-A1-99/13218
- WO-A1-2009/068712
- US-A- 4 683 719
- US-A1- 2012 261 923

## Description

### Technical Field

The present invention relates to a platform, and in particular to an island platform for marine use capable of self-leveling, self-propelling, self-stabilizing, self-positioning and remotely controlled by radio from a virtual dashboard for production of electricity, drinking water, and other products using double action wave power converter.

### Background Art

A number of techniques have been developed over the past century which have attempted to harness the energy stored in sea waves around the world, and cost effectively convert this stored energy into a low cost renewable energy. These wave energy conversion techniques can be divided into three very general classes that include submerged, floating, and so-called oscillating water column types. The first two types primarily exploit the Principle of Archimedes. In the first type, a hollow cylinder is anchored to the bottom and moves vertically taking advantage of the change of hydrostatic pressure from the passing waves. In the second type, the cylinders float on the surface to exploit the amplitude of the waves, with said movement setting in motion hydraulic pistons connected to an electric generator. Finally, in the third type, there are systems that use an oscillating water column which uses the air compressed when the level of the water inside the cylinder rises and falls to activate a turbine which is usually located on the shore above water level in a separate unit. These are usually more reliable and structurally more sound than the previous ones because they are usually formed from concrete or heavy steel and are partially submerged. Unlike the direct drive configuration of the turbine in the oscillating water column configuration, the others use a variety of mechanical components to transfer the motion of the waves through several moving parts (floats, pistons, levers, gears, etc.) to a generator of electrical energy. This requires a conversion of the alternating asymmetrical direction of the wave movement as well as accommodating changes in amplitude and frequency in order to produce a unidirectional and continual axial rotary motion for the subsequent coupling with electric generators which typically use axial rotation. For each one of the aforementioned techniques, there are significant issues. Document WO 99/13218 A1 discloses a sea-wave power plant whereby wave movements are utilized for lifting an lowering at least one float piston disposed within a hollow column and the upward and downward movement of the piston is converted into a rotational movement and then into electrical energy through a generator. The hollow columns are mounted in upright positions on a submersible buoyancy body provided with cylindrical ballast tanks.

### Summary of Invention

Wave Energy Conversion systems with submerged components, compared with the others, may have a relatively low environmental impact, but component and implementation costs are higher due to having to securely anchor them to the seabed in the open sea. Traditional systems with floating devices, in turn, have similar anchoring challenges along with the risk of damage caused by high waves, storms, tsunami, and typhoons. These have the potential to destroy the device or rip it from its mooring. Finally, the oscillating water column systems with shore mounted components are costly to build, and they are not always adaptable to the structure, substrate, and shape of the coastline where the intensity of waves ranges significantly, and where the compressed air produced, being much less dense than water, may not be sufficient to maintain the needed volume needed to activate the generator continuously.

The present invention overcomes the problems listed above by providing a marine platform that is able to exploit the full range of wave motion including its movement in the rising stage, exploiting the principle of Archimedes, and during its falling stage using the forces of gravity. The present invention is a semi-submerged floating structure that is not anchored to the bottom, but can sail to and remain in place through the use of submersible electric marine motors similar to those used in ships. These marine motors are powered by electricity produced by the waves and controlled from the control bridge or remotely controlled using GPS station keeping technology. Having a low center of gravity due to 95% of the weigh being below the water line, the present invention acts much like an iceberg and can survive even the highest waves. The heavy gyroscope located lower in the structure adds additional stability, and together enables the structure to remain in an upright position as it moves up and down in an unlimited range in the water column while continuing to produce electricity.

The present invention is a free floating marine platform for the production of electricity, drinking water, and other products that uses the energy of the wave motion. The platform looks like a semi-floating island, complete with vegetation to improve the visual effect and environmental impact. The structure is formed from large discs which form chambers that stay above and below the water line. These discs are connected by load bearing double walled vertical columns arranged on the outer perimeter and a central column which also provides additional access to the lower chambers from the upper decks via stairs or lift. The emerged portion hosts electrical generators operated by the rise and fall of floats installed on vertical columns which move with the rise and fall of the waves. The floats are attached to toothed rack bars which interact with the special converters which transform the reciprocating, asymmetrical movement of the float into a continuous rotary motion required by the generators to produce electricity. The submerged chamber contains the desalination units which produce potable water for platform use or export and other production solutions, which include but are not limited to, hydrogen production and minerals recovery, stabilization systems based on gyroscope motion, and a leveling solution based on the use of fixed and variable water ballast. The submerged chamber also houses the electricity storage systems and electric motors for sailing to, and remaining at, the designated location using geolocation systems, manned command bridge control and/or remote piloting. The platform is also equipped with auxiliary power production facilities which include, but are not limited to wind, photovoltaic, and an auxiliary generator powered by diesel, LNG, or hydrogen which is integrated with the primary energy production from wave action and ensures the essential functions in case of prolonged absence of waves.

The semi-floating platform of the present invention is not affected by tides, high waves, tsunami, or typhoons and produces clean renewable energy at a very low cost from an autonomous and transportable source which requires no anchoring or mooring.

The present invention is a semi-floating island, formed from large discs emerged and submerged in the water, connected by vertical columns arranged on the outer perimeter. The top of the emerged area is planted with vegetation to reduce the visual and environmental impact. The island hosts electrical generators operated by the rise and fall of the waves which translate to vertical push and pull of the floats installed and move freely along vertical columns inside the structure. The floats are coupled to an electric generator by means of toothed bars and dual motion converters which transform the alternating and asymmetrical motion into a continuous rotary motion yielding constant power generation. The island platform contains desalination plants to produce drinking water, and may also contain electrolysis or other means to produce clean burning hydrogen, or other production components power by sea waves. It also contains stabilization and leveling systems for storing electricity, and for powering submersible electric motors which keep the island platform in position using geolocation systems, on-board piloting or remote piloting. The island platform is also equipped with an auxiliary power sources including, but are not limited to vertical wind generation and photovoltaic solar panels that are integrated with the primary production from wave and ensure the essential functions in case of prolonged absence of waves.

In order to ensure efficient operations performance and production, the island platform is self-leveling, self-stabilizing, self-propelled and self-positioning. These features are accomplished through a series of dedicated technical systems. The properties of self-leveling are obtained through the use of a heavy fixed ballast of a predetermined mass for the features and configuration of the island platform and a variable ballast. This variable water ballast allows the island platform to maintain a level that is midway along the travel path of the floats. This is accomplished by filling an empty chamber with water to lower the island platform or empting it to raise it. Additionally the variable ballast can be used to raise the island platform to level where the ceiling of the generation room is out of the water for moving from one location or another or for lowering it in times of significantly adverse weather and wave conditions.

The property of self-stabilization is guaranteed by a large gyroscope with a heavy mass positioned above the fixed ballast fixed. It is powered by an electric motor which takes energy from the island platform. The gyroscope is enables the island platform to remain as vertical as possible, placing the floats in the best possible attitude to maximize travel with minimal resistance. This aspect affects the proper power transfer by reducing lateral forces that can disrupt the flow of the floats.

The property of self-propulsion is obtained through submersible electric marine engines similar to those installed on oil platforms, which allows the platform to move easily and cruise like a ship that can turn quickly. These motors are lowered into position after launch and can be raised to the emerged technical area for servicing as needed. Navigation and positioning are controlled by suitable GPS systems and electronics installed in an instrument panel positioned in the emerged section of the platform. The electric motors are able to propel the platform without fuel consumption, since the energy is produced by the island platform's wave energy conversion system. With the capability of rotating 360° in the orientation, they are also able to maintain the platform in position once the platform reaches the desired production location geolocation.

In addition to the ability to be operated as a normal vessel, through the technologies of tele-presence and the satellite communications, the platform may be operated remotely with the aid of a virtual instrument panel without need of embarked personnel. If crews are desired on board they can be housed within the staterooms in the emerged section.

Electricity, water and other products produced by the present invention that are not used on board, are exported to underwater cables and pipes to shore or service vessel through an interconnect mounted on the side of the island platform. These connections can be dropped by remote control or from the command bridge in case of an emergency.

The safety of the platform is assured by its very low center of gravity created by the location of the fixed and variable ballasts. If additional weight or floatation is desired, auxiliary cylinders can be attached externally to the load-bearing columns. Finally, the platform being a semi-floating and not bound to the seabed is free from problems associated with any tides, typhoons, or tsunamis. The power cables and pipes that connect the island to the seabed, can have sufficient slack to absorb a significant amount of variation in its position along all three axes. Safety systems required of all sailing vessels including anticollision radars, lighting, life boats, radios, emergency location transmitter, an helipad and personal safety gear are part of the island platform's standard equipment. A free telemedicine service is also provided for the best assistance to personnel in case of need.

The present invention overcomes the problems listed above by providing a marine platform which is able to exploit the full range of wave motion including its movement in the rising phase, exploiting the principle of Archimedes, and in its falling stage using the forces of gravity. The present invention does not require the use of a costly anchoring solution at a fixed location on the seabed or static infrastructure on the coast line with piers and breakwaters or offshore such as offshore platforms.

The present invention can produce nearly twice as much energy as similar solutions which employ the use of a floating, single-action conversion process. The present invention can be easily moved into place under its own power and remain on station without the need for an anchor or anchoring infrastructure. Additionally, since it is not anchored and 95% of the weigh is below the water much like an iceberg, it can survive and operate even in the highest waves, remaining in an upright position at its designated location under its own power while continuing to produce electricity.

In terms of productivity, it is capable of sailing to, and operating in places that are most in need of electricity and drinking water. While the production of potable water is the primary use of the production chamber, this chamber can also be used to produce hydrogen, mineral water, and other products, as well as products like salt and other minerals which can be recovered from the desalination process, all with minimal environmental impacts and risks for sea.

Finally, the present invention is cost effective renewable energy and potable water source. It is simple to manufacture at relatively low cost with high performance in terms of functional efficiency.

### Brief Description of Drawings

Further characteristics and advantages of the present invention will appear more evident from the following description of a preferred, but not exclusive and without limitation, embodiment shown by way of examples in the accompanying drawings.

[fig.1]Fig. 1 shows the outline of the overall structure of the platform with the submerged and emerged part, peripheral structural columns, and floats required for energy production;
[fig.2]Fig. 2 shows the submerged part of the platform. It highlights the solid ballast, the variable water ballast used to level the platform, and the heavy disk that functions as the gyroscope;
[fig.3A]Fig. 3A shows the structure of a float used for exploiting energy from wave motion;
[fig.3B]Fig. 3B shows the structure of a float used for exploiting energy from wave motion;
[fig.4]Fig. 4 shows the part of the platform the sits above the water level, with descriptions of the areas dedicated to different functions of energy production and storage as well as access to the generation and production chambers, control room and bridge; and
[fig.5]Fig. 5 shows an overall view of the platform useful to explain its overall operation.

### Description of Embodiments

Referring to the drawings, the embodiments of the present invention will be described.

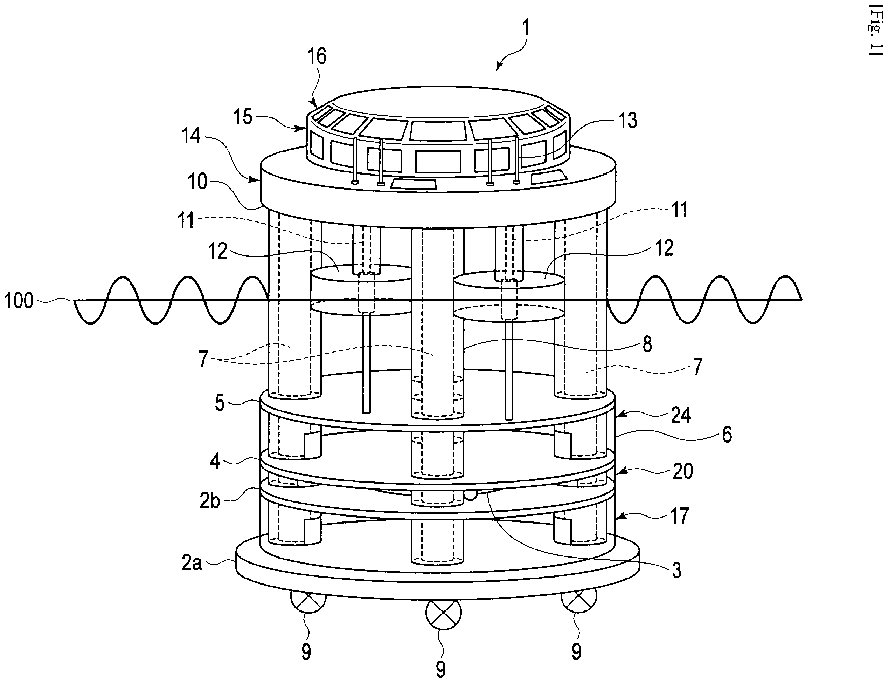

Referring to Figure 1, an outline of the semi-floating structure of the island platform 1 is presented with respect to sea level 100 with the submerged, partially submerged, and emerged sections identified and described as follows.

The island platform 1 has a structure in which a fixed ballast 2a, a variable ballast chamber 17, a gyroscope chamber 20 and one or more production chambers 24 are stacked from the base in the submerged section. The submerged section is also formed by large circular disks constructed of reinforced concrete or similar construction material which forms fixed ballast 2a, the variable water ballast chamber ceiling 2b, gyroscope 3, gyroscope chamber ceiling 4, and production chamber ceiling 5. The variable water ballast chamber ceiling 2b defines the top side of the variable ballast chamber 17 formed on the fixed ballast 2a. The chambers 17, 20 and 24 each are enclosed by a reinforced concrete chambers wall 6 and securely attached to peripheral structural columns 7 and central column 8. Submersible electric marine propulsion motors 9 are attached with controllable mountings extending from the central column of each double-walled peripheral structural column 7 provide the thrust and steering to propel the platform forward or to maintain its assigned position. The motors 9 can be lifted to the generation chamber 14 for maintenance as needed.

The semi-submerged section consists of the area between the production chamber ceiling 5 and the generation chamber floor 10 which are securely attached to load bearing peripheral structural columns 7, and to central column 8. Float support columns 11 securely attached to the production chamber ceiling 5 and generation chamber floor 10 provide the shaft for floats 12 to move freely in alternating directions along its length. Pairs of rack bars 13 transfer to the movement of the floats 12 to energy converters 42. The rack bars 13 provide the torque required to operate the generators 43 and produce electricity through the energy converters 42.

The emerged section consists of the generation chamber 14, control room 15, and the command bridge 16. All ceilings and floors are constructed of aluminum. Structural columns 7 terminates at the top of generation chamber floor 10 of the generation chamber 14 with central column 8 terminating at the floor 44 of the command bridge 16.

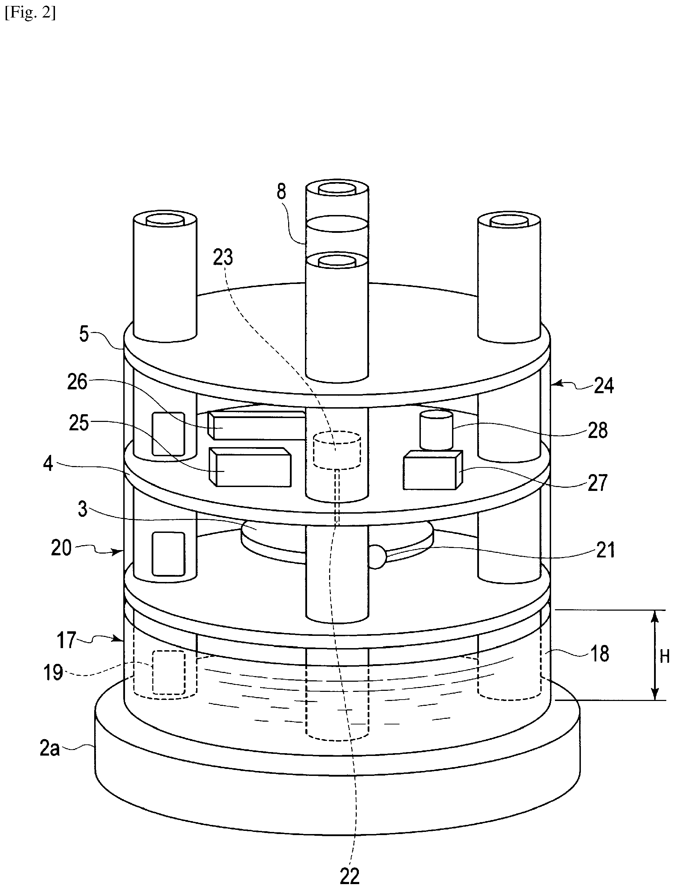

Referring to Figure 2, details of the submerged part of the platform 1 are presented. It highlights the solid fixed ballast 2a, variable ballast 17 used to level the platform 1, and the heavy disk that functions as the gyroscope 3.

Fixed ballast 2a, located at the lowest point on the platform 1, provides a significant portion of the platform's mass to ensure a low center of gravity needed to maintain it in an upright position in the water.

Variable ballast chamber 17 is located immediately above the fixed ballast 2a. The variable ballast chamber 17 can be automatically filled and emptied with sea water 18 to the desired height H from the bottom through appropriate pumps. Watertight doors 19 on structural columns 7 enable access to the variable ballast chamber 17 via spiraling stairs located between the inner and outer walls of the structural columns.

Gyroscope 3 having a shape of disk is mounted horizontally in the center of gyroscope chamber 20. A plurality of, for example three, gyroscope rollers 21 are located symmetrically about the rotational axis of the disk on the perimeter of the disk, provide stable support of the disk. Gyroscope drive shaft 22 located at the center of the disk of the gyroscope 3 connects the gyroscope 3 to the gyroscope drive motor 23 installed at floor level of the production chamber 24 through the central column 8. Access to the production chamber 24 can be made through watertight doors 19.

Production chamber 24 contains the desalination systems 25 or other production system components. The production chamber 24 also houses the energy storage units 26, auxiliary generator 27, and fuel tank 28.

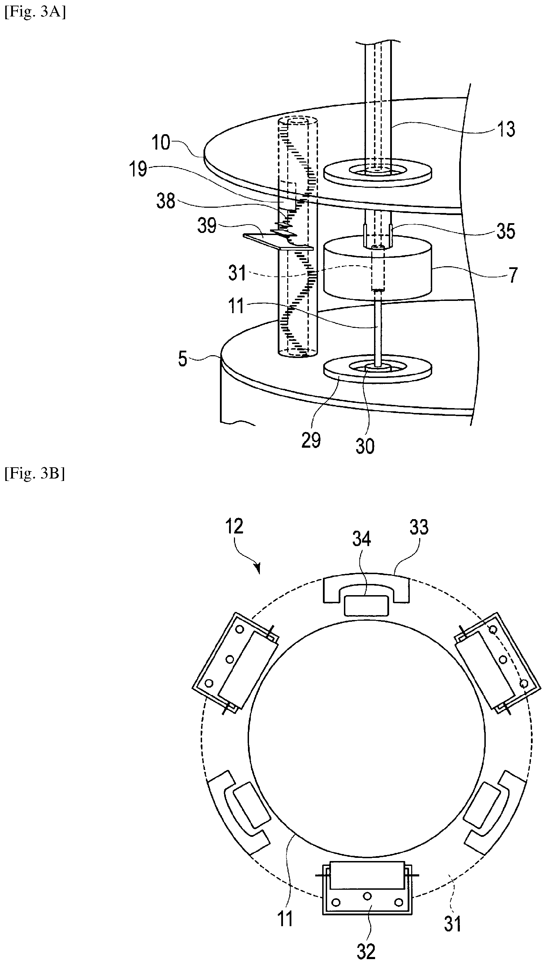

Referring to Figs.3A and 3B, details of the semi-submerged section of the platform 1 are represented in two drawings. Fig. 3A describes the floats system and external access components located between the production chamber ceiling 5 and the generation chamber floor 10, while Fig. 3B provides details of the float tracking components.

Shock absorbers 29 and float support column flanges 30 are respectively installed on the base and at the top of float support column 11.

Floats 12, constructed by one rolled aluminum sheet cylinder and two aluminum flat sheets having a central channel 31 also made aluminum, travel up and down with the rise and fall of the wave along the float support column 11. Referring to Fig. 3B, float guide rollers 32 mounted on the top and bottom of the float 12, insure the float 12 stays centered on the float support column 11. Float alignment guide 33, mounted along the vertical axis of float central channel 31, and alignment key 34, mounted on the float support column 11 and engaged with the float alignment guide 33, ensure floats 12 remain in proper alignment with the float support column 11.

Pairs of toothed rack bars 13 are attached to flexible joints 35 which are connected to the top of the float 12. Each pair of rack bars 13 are aligned along the top centerline of float 12 on opposite sides of float central channel 31. A rack bar 13 extends upward through float support flanges 30 installed on the generator chamber floor 10, and ceiling of the floor 10 above.

Watertight door 19 is installed on the outside wall of each peripheral structural columns 7 one meter above the average water line to provide entry and egress to the island platform. Steps 38 installed facing the sea on the outer wall of the peripheral structural column 7 lead to a boarding platform 39 installed above the average water line.

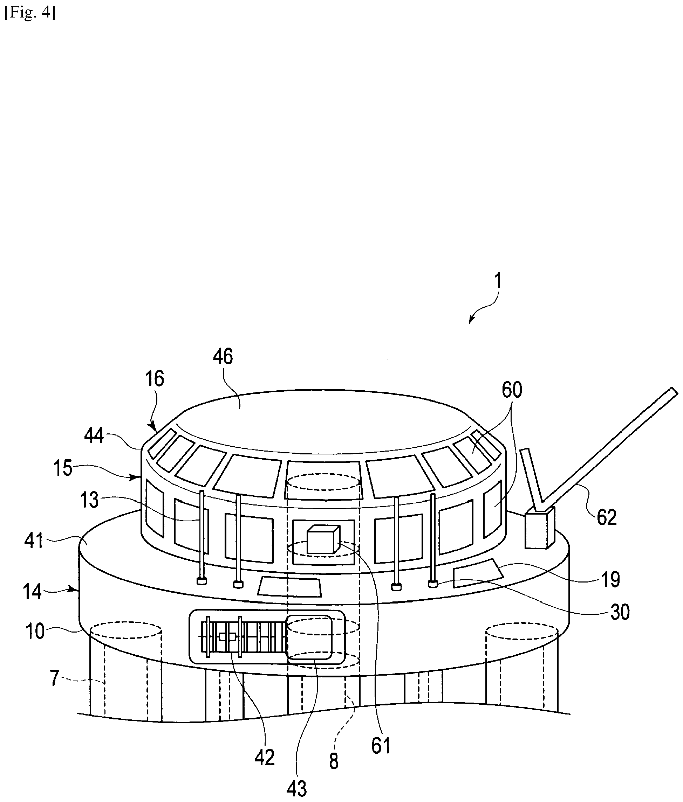

Referring to Fig. 4, details of the emerged section of the platform 1 are presented. This figure highlights the generation chamber 14, converter 42 and generator 43 in the generation chamber 14, and the control room 15 and command bridge 16.

Generation chamber 14 is formed of rolled aluminum securely attached to generation chamber floor 10, structural columns 7, and central column 8. Rack bars 13 pass through float support flanges 30 mounted on the generation chamber floor 10 and generation chamber ceiling 41 respectively. Structural columns 7 terminate at the generation chamber floor 10, while central column 8 passes though the generation chamber floor 10 and generation chamber ceiling 41. Watertight doors 19 provide overhead access to the generation chamber 14.

Energy converter 42 converts the reciprocating vertical motion of the rack bars 13 into continuous unidirectional circular motion, providing the torque required by generator 43 to produce electricity. In order to maintain the continuous unidirectional circular motion, a flywheel may be connected to the generator 43.

Control room 15 is formed of rolled aluminum sheet which is securely attached to generation chamber ceiling 41 and command bridge floor 44, both of which are constructed of aluminum or other structural material that is both light in weight and strong. Central column 8 passes through the center of the control room 15 terminating on the command bridge 16 level. Watertight windows 60 are mounted in aluminum frames that are installed around the perimeter of the control room 15 and the command bridge 16. The control room 15 houses the electronics supporting the day to day operations of the island platform, navigation, security, and other systems as well as the guest rooms and restrooms which support the onboard crew and visitors when needed.

Command bridge 16 is also constructed of rolled aluminum sheet securely attached to command bridge floor 44 and command bridge ceiling 46, both being constructed of aluminum. Acrylic watertight windows 60 encircle the sloping walls extending between the command bridge floor 44 and the command bridge ceiling 46. Central column 8, extending from the production chamber 24, terminates in the center of the command bridge floor 44. In addition to stairs 55, a lift 61 is provided to assist in accessing the other chambers. Full equipments of navigation, weather, communications, safety, and security instrumentation as well operational monitoring and control components of the present invention are located in the command bridge 16. Command bridge ceiling 46 constructed of reinforced aluminum also provides the structure required to support the PV solar cells 50 and helipad 51 thereabove.

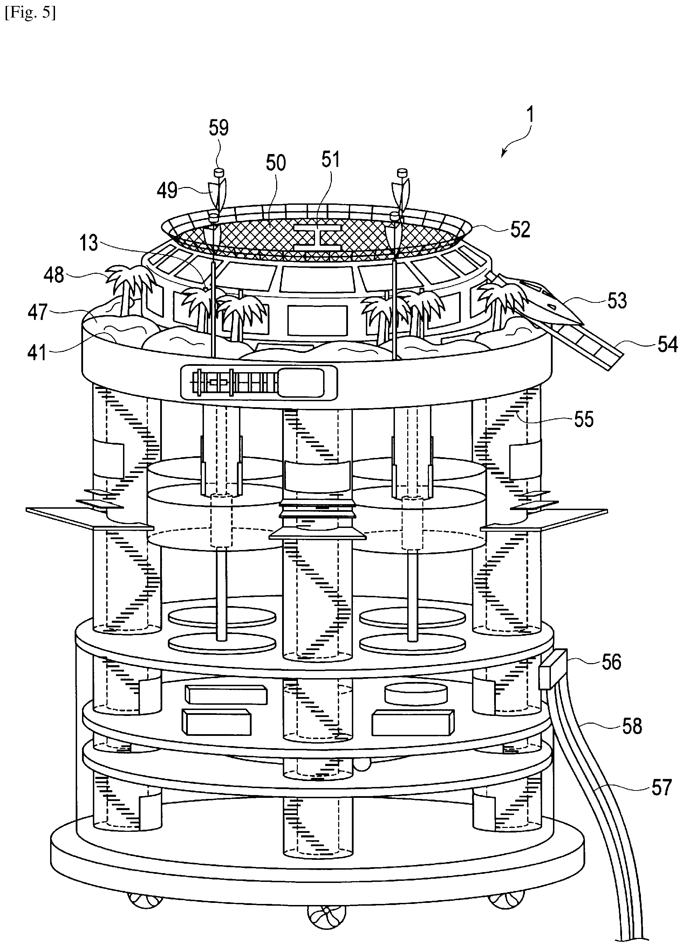

Referring to Fig. 5, a fully assembled view is shown. This shows the auxiliary power sources, safety equipment and vegetation used to improve the aesthetics of the island platform. The vegetation includes foliage 47 and trees 48.

Vertical wind generators 49 an auxiliary power source are securely attached to the generation chamber ceiling 41 in proximity of the rack bars 13 disposed along the outside edge of generation chamber ceiling 41. Photovoltaic solar panels 50 are installed on top of the command bridge ceiling 46. Together, these provide auxiliary sources of power for the electronics and ships motors during the infrequent times when there is insufficient wave height to power the island platform 1.

Safety fence 52 attached to the command bridge ceiling 46 slopes upward and outward to avoid potential interference with helicopters landing or taking off from the helipad 51. Lifeboat 53 slides down launching ramp 44 in case of an emergency. Navigation lights 59 are installed atop the wind turbines 49 to warn approaching sailors of the island platform 1's presence.

Interconnect 56, located on the outside wall of the production chamber 24, provides the connection point for attaching submersible power cable 57 and water pipe 58 to the grid interconnects located on the seabed, submerged below the surface, or other transfer connection point as implemented.

As shown in Fig. 4, crane 62, installed on top of generation chamber ceiling 41, is used to load/unload materials from visiting vessels, and to transfer products (salt and other minerals) to transport vessels.

Further, the features of the present invention may be listed as follows.

There is provided a mobile and semi-floating island platform 1 for the exploitation of sea waves. The island platform 1 is characterized by a plurality of disks including disks functioning as a fixed ballast 2a, a variable ballast chamber ceiling 2b, a stabilizing gyroscope 3, a gyroscope chamber ceiling 4, a production chamber ceiling 5 and a generation chamber floor 10, the fixed ballast 2a and the variable ballast chamber ceiling 2b defining the top and the bottom of a variable ballast chamber 17, the variable ballast chamber ceiling 2b and the gyroscope chamber ceiling 4 defining the top and the bottom of a gyroscope chamber 20, and the gyroscope chamber ceiling 4 and the production chamber ceiling 5 defining the top and the bottom of a production chamber 24. A chamber wall 6 provides the outside structure for the variable ballast chamber 17, the gyroscope chamber 20 and the production chamber 24. The chambers 17, 20 and 24 are connected through dual-walled structural columns 7 and central column 8. The structural columns 7 and the central column 8 have spiraling stairs 55 along their length. The structural columns 7 have watertight doors 19 for access to each chamber. The generation chamber 14 the bottom surface of which is defined by the generation chamber floor 10 hosts the equipment used for the conversion and management of the energy produced by floats 12 which slide along float support columns 11 and transfer the power by means of rack bars 13 to an energy converter 42. The energy converter 42 converts the alternate movement into continuous circular movement with sufficient torque to turn electric generator 43 which, in turn supplies energy to energy storage units 26 used to feed the platform 1 for propulsion, positioning and control of the platform 1 as well as energy needed by the desalination and other devices in the production chamber as well as provide the energy that can be distributed to connected devices at sea or to the an submarine power cable for distribution to a shore based power grid. A control room 15 is used to house computers and quarters for personnel, while a command bridge 16 provides a 360° view of the surrounding area and provides a complete range of instrumentation for the safe operation of the island platform 1 during movement and operation. Solar PV and wind generators provide auxiliary power sources to feed the island platform during periods when wave movement is less than the minimum conditions required. Safety equipment including lifeboat 53, lights 59, and safety fence 52 and other equipment required by naval regulations for a sailing vessel are located in the emerged section. Connectivity to the grid or external devices for the distribution of electricity, potable water, or other commodities produced on the platform island is provided through interconnect 56, power cable 58, and water pipe 58. A helipad 51 provides a landing platform for small helicopters ferrying personnel and equipment to the island platform 1. Trees 48 and foliage 47 provide aesthetic components to improve the visual appeal of the island platform 1 from the shore.

One of the underwater disks is a solid disk which functions as a fixed ballast 2a and by a large tank that functions as variable ballast chamber 17 which is filled and emptied automatically with sea water to level the structure and to keep the average level of the sea waves at the middle of the float support columns 11 regardless of the weather and marine conditions, and consequently allowing the floats 12 to have the maximum excursion to fully exploit the power of the waves.

The gyroscope 3 is a solid circular disk of heavy mass and having three rollers 21 attached to its periphery which rotate on the disk that also serves as the variable water ballast chamber ceiling 2. The gyroscope 3 is attached at its center to a central drive shaft 22 which in turn is connected to and rotated by electric gyroscope drive motor 23. Through the rotation of this heavy mass, any rolling and pitching along a horizontal is neutralized, stabilizing the island platform and thus minimizing mechanical loss and maximizing the vertical sliding of the floats yielding the maximum transfer of energy.

The floats 12 are compelled to slide along the vertical float support columns 11 facilitated by float guide rollers 32 locate at the top and bottom of the float along the perimeter of the float central channel 31. To counteract potential turning, float alignment guide 33 and float alignment key 34 are attached along the length of the float central channel 31 and float support column 11 respectively. Heavy pads that serve as shock absorbers 29 are installed around the float support column 11 to protect the floats during extreme wave crests and troughs. Power is transferred from the floats 12 by way of pairs of rack bar 13 connected to flexible joints 35 at the float end that compensate for any horizontal movement. Rack bars 13 connect to energy converter 42 which transform the alternate motion into continuous motion. Rack bars 13 are stabilized at their ends and when passing through the disks by float support flanges 30.

Said floats 12 are constructed of rolled aluminum sheets forming the walls, central channel, top, and bottom. Other materials such as carbon fiber, poly foam with supporting frame, or other material suitable for operation in a marine environment may be used. These floats are designed as far as weight concern in such a way that they can transfer their power to the energy converters 42 during their rise based on the principle of Archimedes and, during their descent based on the force of gravity, always maintaining the proper weight and lift based on the torque needed by the generator. Floats are empty with internal separations, and they are filled with water to reach the needed weight to generate the torque for the generators during the floats descent.

At the lower end of the structural columns 7, there are some electric propulsion motors 9 with 360° movement which allows the navigation and the positioning of the platform. The motors are contained in a cylinder that slides in the inner column and can be lifted to the generation chamber 14 for possible maintenance.

The island platform 1 has an energy storage unit 26 which is used to stabilize output of generators 43 and auxiliary power sources including wind turbine 49 and PV solar panels 50 located in the emerged section of the platform 1 and the auxiliary generator 27 located in the submerged section.

The island platform 1 has a production chamber 24 located in the submerged section that contains the desalination units needed to produce potable water for rinsing the interface between the rack rear bar 13 and the energy converter 42, for staff consumption, and for irrigating the vegetation on the emerged section of the island platform and commercial distribution. It also houses the energy storage units 26, auxiliary generator and fuel tank and other production equipment such as those used to produce mineral water, hydrogen or the recovery of bine, salt, manganese and other minerals from the discharge from the desalination units which can be distributed commercially. Cables and pipes carrying electricity, potable water and other products for external distribution are connect to an interconnect 56 on the wall of the production chamber and which in turn, enables external submersible power cables 57 and water pipes 58 to be connected. Interconnect 56 is equipped with an emergency quick disconnect which activates when too much stress is places on the attached cable and pipe. Disconnection can also be activated from the command bridge or from the remote operations center.

The island platform 1 has a generation chamber 14 formed of rolled aluminum sheets and securely attached to the generation chamber floor 10 and ceiling 41. Energy converters 42 and generators 43 are located between structural columns 7 with water tight doors 19 providing access to other floors below. Watertight doors 19 are also located above the generators to provide overheat access. Rack bars 13 are supported by float support flanges 30. Crane 62, installed on top of generation chamber ceiling 41, is used to load/unload materials from visiting vessels, and to transfer products (salt and other minerals) to transport vessels.

The island platform 1 has a control room 36 located above the generation chamber 14 in the emerged section of the island platform 1. This chamber is constructed of aluminum and has series of acrylic watertight windows around its periphery. In addition to housing the computers radar, 360° video instrumentation and GPS equipment used to navigate the platform and other electronic equipment that can be controlled by the onboard crews from the command bridge 16 or remote operations. This area also contains rooms, showers, kitchen, and infirmary with telemedicine assistance and restroom facilities for crew and visiting personnel.

The island platform 1 has a command bridge 16 located above control room 36 at the topmost level of the island platform 1's emerged section. This area provides a 360° view of the surrounding area. This chamber is constructed of aluminum and has series of acrylic watertight windows 60 around its periphery. Central column 8, extending from the production chamber 24 to this level and terminating in the center of the bridge area, is accessed by stairs 55 and lift 61 which is also used to move equipment between chambers. Full equipments of navigation, weather, communications, safety, and security instrumentation and electronic displays as well as operational monitoring and control components are located in this area. Command bridge ceiling 46, constructed of reinforced aluminum, provides the sturdy structure required to support the PV photocells 50 and helipad 51 thereabove. The command bridge telecommunication systems also provides telemedicine assistance to the infirmary through another patented system of the same inventor, with audio/video/data connection to the International Radio Medical center that supplies free medical consultancy to all ships in navigation and remote islands.

All safety equipments required by naval regulations for commercial vessel operation are present on the island platform 1. These include, but are not limited to lifeboat 53, launching ramp 54, navigation lights 59 installed on the tops of vertical wind turbines 49, and outward sloping safety fence 52 surrounding helipad 51, and all safety devices required for unlimited navigation, enabling the island platform 1 free to navigate in all international waters.

The island platform 1 presenting an aesthetically appealing appearance, foliage 47 and trees 48 are installed above the generation ceiling. Artificial trees having a hollow trunk may be used to hide the rack bars 13 from view. Irrigation for the live vegetation is provided by the water produced by the desalination system 25.

### Industrial Applicability

The global mandate for countries around the world is to increase their use of renewable energy in order to reduce the use of fossil fuels which in turn, will reduce the amount of greenhouse gases and harmful pollution. The present invention uses the massive amount of untapped energy stored in the sea waves to create low cost, clean, renewable energy that will provide a significant contribution to this global mandate. Solar energy generation ceases when the sun is not in view and wind generation requires the presence of wind which typically drops at night, and output from tidal flow generation solutions vary with the level of changing tides and with periods of inactivity during tidal change. On the other hand, ocean waves are always present and offer an uninterrupted source of potential energy. The present invention, with its dual action wave conversion technology, provides the most efficient means of capturing this energy and converting it to electricity which can then be connected to the public power grids through undersea power cables. This supply of energy can also be used to power desalination systems on board the island platform which can produce large amounts of potable water and electrolysis systems used for hydrogen generation and complementary compression systems which can produce large amount of clean burning hydrogen fuel. The power can also be used to process the discharge water from the desalination system, enabling the retrieval of salt brine, salt, soda, chlorine, magnesium, and other minerals for commercial use. A key feature of the present invention is its ability to be configured, scaled, and tailored to meet the needs of a broad range of customers anywhere in the world where there are sea waves and a need.

The embodiment of the present invention presented by way of examples, enable it to be adapted to numerous fields of application in which a system for the production of mobile energy, potable water and other products may be employed usefully while maintaining the same advantages and without departing from the scope of the present invention. Additionally, details of structures and dimensions may be varied in a manner appropriate and consistent with the present invention. Variations may include, but are not limited to, changes in the scale and geometry of the general structure, support columns, ballasts, disks and chambers, gyroscope and propulsion motors. The same goes for the transmissions and power components such as floats, bearings, rods, shafts and gears where changes are in line with the principle of operation.

### REFERENCE SYMBOLS

- 1: Island platform
- 2a: Fixed ballast
- 2b: Variable ballast chamber ceiling
- 3: Gyroscope
- 4: Gyroscope chamber ceiling
- 5: Production chamber ceiling
- 6: Chamber wall
- 7: Peripheral structural column
- 8: Central column
- 9: Electric propulsion motor with controllable mounting
- 10: Generation chamber floor
- 11: Float support column
- 12: Float
- 13: Rack bar
- 14: Generation chamber
- 15: Control room
- 16: Command bridge
- 17: Variable ballast chamber
- 18: Sea water
- 19: Watertight door
- 20: Gyroscope chamber
- 21: Gyroscope rollers
- 22: Gyroscope drive shaft
- 23: Gyroscope drive motor
- 24: Production chamber
- 25: Desalination system (or other production systems)
- 26: Energy storage unit
- 27: Auxiliary generator
- 28: Fuel tank
- 29: Shock absorber
- 30: Float support flange
- 31: Float central channel
- 32: Float guide rollers
- 33: Float alignment guide
- 34: Float alignment key
- 35: Flexible joint
- 38: Steps
- 39: Boarding platform
- 41: Generation chamber ceiling
- 42: Energy converter
- 43: Generator
- 44: Command bridge floor
- 46: Command bridge ceiling
- 47: Foliage
- 48: Trees
- 49: Vertical wind turbine
- 50: PV solar cells
- 51: Helipad
- 52: Safety fence
- 53: Lifeboat
- 54: Launching ramp
- 55: Spiraling stairs
- 56: Interconnect
- 57: Power cable
- 58: Water pipe
- 59: Navigation light
- 60: Acrylic watertight window
- 61: Lift
- 62: Crane

## Claims

1. A platform (1) for marine use floating in a sea, comprising:
a submerged portion existing below a sea surface, the submerged portion including a ballast for the platform (1) maintaining an upright position in a water and a plurality of chambers sequentially stacked on the ballast (2a);
an emerged portion existing above the sea surface; and
a wave power generation mechanism portion including the sea surface and coupling the submerged portion and the emerged portion, the wave power generation mechanism portion further including a plurality of floats (12) floating on the sea surface and traveling along float support columns (11) between the submerged and emerged portions, the emerged portion including a generation chamber (14) housing a converter (42) for converting upward and downward movements of the plurality of floats (12) propelled by waves into a continuous unidirectional circular movement and a generator (43) for generating power by the continuous unidirectional circular movement, **characterized in that** the ballast includes a fixed ballast (2a), the weight of which is fixed and a variable ballast, the weight of which can vary by changing an amount of sea water (18) filled therein, wherein the fixed ballast (2a) is located at the lowest point of the platform (1) and provides a significant portion of the platform's (1) mass to ensure a low center of gravity of the platform (1) such that an upright position of the platform (1) in the water is maintained.

2. The platform (1) of claim 1 wherein the variable ballast is configured as a variable ballast chamber (17) the bottom of which is defined by the fixed ballast (2a).

3. The platform (1) of claim 2 wherein a gyroscope chamber (20) is stacked on the variable ballast chamber (17), the bottom of the gyroscope chamber (20) being defined by the ceiling (2b) of the variable ballast chamber (17) and the gyroscope chamber (20) housing a disk functioning as a gyroscope (3).

4. The platform (1) of claim 3 wherein one or more production chambers (24) are stacked on the gyroscope chamber (20), the bottom of the production chamber (24) being defined by the ceiling (4) of the gyroscope chamber (20) and the production chamber (24) housing a desalination system (25) operated by a power supplied from the generator (43).

5. The platform (1) of claim 1 wherein the submerged portion and the emerged portion are connected by one central column (8) and a plurality of structural columns (7) disposed symmetrically around the central column (8).

6. The platform (1) of claim 5 wherein the submerged portion and the emerged portions are configured to having a shape of cylinder, the plurality of structural columns (7) being disposed equally spaced with each other in a circumferential direction of the cylinder.

7. The platform (1) of claim 1 further comprising a float support column (11) disposed between the submerged portion and the generation chamber, the plurality of floats (12) moving upwardly and downwardly along the float support column (11).

8. The platform (1) of claim 7 further comprising a rack bar (13) disposed on each of the plurality of floats (12) and extending in parallel with the float support column (11) to be connected to the converter (42), the upward and downward movements of each float (12) being inputted to the converter (42) via the rack bar (13).

9. The platform (1) of claim 5 wherein each of the plurality of structural columns (7) has a double walled structure with a spiral staircase (55) located between the two walls with watertight doors (19) enabling access to the chambers.

10. The platform (1) of claim 5 wherein the plurality of structural columns (7) are four or more columns.

11. The platform (1) of claim 5 wherein each of the plurality of structural columns (7) is provided with a propulsion motor (9) enabling an orientation thereof to be changed 360° about an axial direction of the structural columns (7).

12. The platform (1) of claim 11 wherein the propulsion motor (9) can be lifted up to the generation chamber (14) for maintenance.

13. The platform (1) of any one of claims 1 to 12 wherein the float (12) is configured as a hollow body made of aluminum or other lightweight and structural materials providing the lift and weight required to provide properties similar to those of floats (12) constructed of aluminum.

14. The platform (1) of any of claims 1 to 13 wherein a 95% or more weight of the platform (1) exists below the sea surface.

15. The platform (1) of claim 4 wherein the production chambers (24) further house a system for producing mineral water or hydrogen.

## Patentansprüche

1. Plattform (1) für Meeresanwendungen, die in einem Meer schwimmt, umfassend:
einen untergetauchten Teil, der unterhalb eines Meeresoberfläche vorhanden ist, wobei der untergetauchte Teil einen Ballast für das Halten der Plattform (1) in einer aufrechten Position in einem Wasser und mehrere nacheinander auf dem Ballast (2a) gestapelte Kammern umfasst;
einen aufgetauchten Teil, der oberhalb der Meeresoberfläche vorhanden ist; und
einen Wellenenergie-Erzeugungsmechanismusteil, der die Meeresoberfläche umfasst und den untergetauchten Teil und den aufgetauchten Teil koppelt, wobei der Wellenenergie-Erzeugungsmechanismusteil ferner mehrere Schwimmkörper (12) umfasst, die auf der Meeresoberfläche schwimmen und sich entlang Schwimmerkörperträgersäulen (11) zwischen dem untergetauchten und aufgetauchten Teil bewegen, wobei der aufgetauchte Teil eine Erzeugungskammer (14) umfasst, die einen Wandler (42) zum Wandeln von Aufwärts- und Abwärtsbewegungen der mehreren durch Wellen angetriebenen Schwimmkörper (12) in eine ununterbrochene unidirektionale Kreisbewegung und einen Generator (43) zum Erzeugen von Energie durch die ununterbrochene unidirektionale Kreisbewegung aufnimmt, **dadurch gekennzeichnet, dass** der Ballast einen unveränderlichen Ballast (2a), dessen Gewicht unveränderlich ist, und einen variablen Ballast, dessen Gewicht durch Ändern einer darin eingefüllten Menge an Meereswasser (18) variieren kann, umfasst, wobei sich der unveränderliche Ballast (2a) am untersten Punkt der Plattform (1) befindet und einen bedeutenden Teil der Masse der Plattform (1) bereitstellt, um einen niedrigen Schwerpunkt der Plattform (1) so sicherzustellen, dass eine aufrechte Position der Plattform (1) im Wasser gehalten wird.

2. Plattform (1) nach Anspruch 1, wobei der variable Ballast als ein Kammer mit variablem Ballast (17) ausgestaltet ist, deren Boden durch den unveränderlichen Ballast (2a) definiert ist.

3. Plattform (1) nach Anspruch 2, wobei eine Gyroskopkammer (20) auf der Kammer mit variablem Ballast (17) gestapelt ist, wobei der Boden der Gyroskopkammer (20) durch die Decke (2b) der Kammer mit variablem Ballast (17) definiert ist und die Gyroskopkammer (20) eine als Gyroskop (3) funktionierende Scheibe aufnimmt.

4. Plattform (1) nach Anspruch 3, wobei eine oder mehrere Produktionskammern (24) auf der Gyroskopkammer (20) gestapelt sind, wobei der Boden der Produktionskammer (24) durch die Decke (4) der Gyroskopkammer (20) definiert ist und die Produktionskammer (24) ein Entsalzungssystem (25) aufnimmt, das durch eine von dem Generator (43) versorgte Energie angetrieben wird.

5. Plattform (1) nach Anspruch 1, wobei der untergetauchte Teil und der aufgetauchte Teil durch eine mittige Säule (8) und mehrere symmetrisch um die mittige Säule (8) herum angeordneten Struktursäulen (7) verbunden sind.

6. Plattform (1) nach Anspruch 5, wobei der untergetauchte Teil und der aufgetauchte Teil so ausgestaltet sind, dass sie eine Zylinderform aufweisen, wobei die mehreren Struktursäulen (7) in einer umfangsmäßigen Richtung des Zylinders untereinander gleich beabstandet angeordnet sind.

7. Plattform (1) nach Anspruch 1, ferner umfassend eine Schwimmerkörperträgersäule (11), die zwischen dem untergetauchten Teil und der Erzeugungskammer angeordnet ist, wobei sich die mehreren Schwimmerkörper (12) aufwärts und abwärts entlang der Schwimmerkörperträgersäule (11) bewegen.

8. Plattform (1) nach Anspruch 7, ferner umfassend eine Zahnstange (13), die an jedem der mehreren Schwimmerkörper (12) angeordnet ist und sich parallel mit der Schwimmerkörperträgersäule (11) erstreckt, um mit dem Wandler (42) verbunden zu werden, wobei die Aufwärts- und Abwärtsbewegungen von jedem Schwimmerkörper (12) in den Wandler (42) über die Zahnstange (13) zugeführt werden.

9. Plattform (1) nach Anspruch 5, wobei jede der mehreren Struktursäulen (7) eine doppelwandige Struktur mit einer Wendeltreppe (55) aufweist, die sich zwischen den zwei Wänden mit wasserdichten Türen (19) befindet, die Zugang zu den Kammern ermöglichen.

10. Plattform (1) nach Anspruch 5, wobei die mehreren Struktursäulen (7) vier oder mehr Säulen sind.

11. Plattform (1) nach Anspruch 5, wobei jede der mehreren Struktursäulen (7) mit einem Antriebsmotor (9) versehen ist, der ermöglicht, dass eine Ausrichtung davon 360° um eine axiale Richtung der Struktursäulen (7) herum geändert wird.

12. Plattform (1) nach Anspruch 11, wobei der Antriebsmotor (9) zur Erzeugungskammer (14) zur Wartung angehoben werden kann.

13. Plattform (1) nach einem der Ansprüche 1 bis 12, wobei der Schwimmerkörper (12) als ein Hohlkörper ausgestaltet ist, der aus Aluminium oder oder anderen Leichtgewicht- und Strukturmaterialen, die den Auftrieb und das Gewicht bereitstellen, die erforderlich sind, um Eigenschaften bereitzustellen, die ähnlich denen von aus Aluminium gestalteten Schwimmerkörpern (12) sind, hergestellt ist.

14. Plattform (1) nach einem der Ansprüche 1 bis 13, wobei 95% oder mehr Gewicht der Plattform (1) unterhalb der Meeresoberfläche vorhanden ist.

15. Plattform (1) nach Anspruch 4, wobei die Produktionskammern (24) ferner ein System zum Herstellen von Mineralwasser oder Wasserstoff aufnehmen.

## Revendications

1. Plate-forme (1) en mer, pour applications maritimes, flottant sur l'eau, comprenant :
une partie submergée située sous le niveau de la mer, la partie submergée comprenant un ballast permettant de maintenir la plate-forme (1) droite dans l'eau, ainsi qu'une pluralité de chambres empilées séquentiellement sur le ballast (2a) ;
une partie émergée située au-dessus du niveau de la mer ; et
une partie de mécanisme de génération d'énergie houlomotrice comprenant la surface de la mer, et couplant la partie submergée et la partie émergée, la partie de mécanisme de génération d'énergie houlomotrice comprenant en outre une pluralité de flotteurs (12) flottant sur la surface de la mer, et se déplaçant le long de colonnes de support de flotteur (11) entre les parties submergée et émergée, la partie émergée comprenant une chambre de génération (14) contenant un convertisseur (42) assurant la conversion de mouvements ascendants et descendants de la pluralité de flotteurs (12) propulsés par des vagues dans un mouvement circulaire unidirectionnel continu, et un générateur (43) pour la génération d'énergie par le mouvement circulaire unidirectionnel continu, **caractérisée en ce que** le ballast comprend un ballast fixe (2a), dont le poids est fixe, et un ballast variable, dont on peut varier le poids en modifiant un volume d'eau de mer (18) placé à l'intérieur, le ballast fixe (2a) étant situé à l'extrémité la plus basse de la plate-forme (1) et représentant une partie significative de la masse de la plate-forme (1) afin d'assurer la présence d'un faible centre de gravité sur la plate-forme (1) de façon à maintenir la position droite de la plate-forme (1) dans l'eau.

2. Plate-forme (1) selon la revendication 1, le ballast variable étant configuré comme une chambre de ballast variable (17) dont le fond est défini par le ballast fixe (2a).

3. Plate-forme (1) selon la revendication 2, une chambre de gyroscope (20) étant empilée sur la chambre de ballast variable (17), le fond de la chambre de gyroscope (20) étant défini par le plafond (2b) de la chambre de ballast variable (17), et la chambre de gyroscope (20) contenant un disque fonctionnant comme un gyroscope (3).

4. Plate-forme (1) selon la revendication 3, une ou plusieurs chambres de production (24) étant empilées sur la chambre de gyroscope (20), le fond de la chambre de production (24) étant défini par le plafond (4) de la chambre de gyroscope (20), et la chambre de production (24) contenant un système de dessalement (25) commandé par une source d'alimentation fournie par le générateur (43).

5. Plate-forme (1) selon la revendication 1, la partie submergée et la partie émergée étant raccordées par une colonne centrale (8) et une pluralité de colonnes structurelles (7) disposées symétriquement autour de la colonne centrale (8).

6. Plate-forme (1) selon la revendication 5, la partie submergée et la partie émergée étant configurées pour avoir la forme d'un cylindre, la pluralité de colonnes structurelles (7) étant disposée de façon que les colonnes soient équidistantes dans une direction circonférentielle du cylindre.

7. Plate-forme (1) selon la revendication 1, comprenant en outre une colonne de support de flotteur (11) disposée entre la partie submergée et la chambre de génération, la pluralité de flotteurs (12) se déplaçant en haut et en bas le long de la colonne de support de flotteur (11).

8. Plate-forme (1) selon la revendication 7, comprenant en outre une barre de crémaillère (13) disposée sur chacun de la pluralité de flotteurs (12), et déployée parallèlement à la colonne de support de flotteur (11), afin de se connecter au convertisseur (42), les mouvements ascendants et descendants de chaque flotteur (12) étant transmis au convertisseur (42) par le biais de la barre de crémaillère (13).

9. Plate-forme (1) selon la revendication 5, chacune de la pluralité de colonnes structurelles (7) possédant une structure à double paroi avec un escalier en colimaçon (55) situé entre les deux parois, avec des portes étanches (19) permettant d'accéder aux chambres.

10. Plate-forme (1) selon la revendication 5, la pluralité de colonnes structurelles (7) comprenant quatre colonnes ou davantage.

11. Plate-forme (1) selon la revendication 5, chacune de la pluralité de colonnes structurelles (7) étant dotée d'un moteur de propulsion (9) permettant d'en varier de 360° l'orientation dans une direction axiale des colonnes structurelles (7).

12. Plate-forme (1) selon la revendication 11, le moteur de propulsion (9) pouvant être soulevé jusqu'à la chambre de génération (14) pour l'entretien.

13. Plate-forme (1) selon une quelconque des revendications 1 à 12, le flotteur (12) étant configuré comme un corps creux réalisé en aluminium, ou autres matériaux légers et structurels présentant la portance et le poids nécessaires pour fournir des propriétés similaires à celles de flotteurs (12) fabriqués en aluminium.

14. Plate-forme (1) selon une quelconque des revendications 1 à 13, 95% ou davantage du poids de la plate-forme (1) se trouvant sous le niveau de la mer.

15. Plate-forme (1) selon la revendication 4, les chambres de production (24) contenant en outre un système de production d'eau minérale ou d'hydrogène.
